# FASCICULE DE BREVET EUROPEEN

(11) **EP 1 842 271 B1**
(45) Date de publication et mention de la délivrance du brevet: **03.07.2013**
(21) Numéro de dépôt: 06709141.3
(22) Date de dépôt: 20.01.2006
(51) Int. Cl.: H02G 3/08, H02G 15/013

(54) **ELEMENT DE PAROI POUR TRAVERSEE ETANCHE DE CABLE**
WANDELEMENT FÜR EINE DICHTE KABELDURCHFÜHRUNG
WALL ELEMENT FOR SEALINGLY PASSING A CABLE

(30) Priorité: 25.01.2005 FR 0500772
(43) Date de publication de la demande: 10.10.2007
(73) Titulaire: Legrand France, 87000 Limoges (FR); Legrand SNC, 87000 Limoges (FR)
(72) Inventeur: DESISSARD, Olivier, F-87510 Saint-Jouvent (FR); DUPUY, Sébastien, F-87500 Saint-Yrieix La Perche (FR); FOURCADE, Jean-Pierre, F-87920 Condat sur Vienne (US); NOUGIER, Bernard, F-87000 Limoges (FR)
(74) Mandataire: Novagraaf Technologies
(86) Numéro de dépôt international: PCT/FR2006/000137
(87) Numéro de publication internationale: WO 2006/079707

(56) Documents cités:
- FR-A- 1 388 822
- US-A- 5 125 527
- US-A1- 2002 079 652

## Description

L'invention concerne, de façon générale, les techniques de câblage, notamment dans le domaine de l'électricité.

Plus précisément, l'invention concerne un élément de paroi pour traversée étanche de câble, notamment utilisable comme élément de paroi d'un boîtier électrique étanche ou d'un tube et présentant au moins une configuration originelle et une configuration opérationnelle, cet élément de paroi comprenant un voile rigide percé d'un orifice et un voile souple bouchant cet orifice dans la configuration originelle de l'élément de paroi, le voile souple comprenant au moins une zone interne disposée sensiblement au centre de l'orifice, bordée par une ligne annulaire de fragilité, et dotée d'un organe de préhension permettant de la détacher par déchirure du voile souple le long de la ligne de fragilité pour placer l'élément de paroi dans sa configuration opérationnelle.

Un tel élément de paroi est notamment décrit dans le brevet FR 1 388 822.

Plus généralement, des éléments de paroi, éventuellement amovibles, sont notamment connus de l'homme du métier dans leur application aux boîtiers étanches de connexion électrique, et des exemples en sont donnés dans les brevets FR 1540 647, DE 1 083 382, et US 3 182 119.

Pour optimiser la qualité de l'étanchéité, il est connu de donner au voile souple des propriétés élastiques, qui lui permettent d'enserrer avec une force non nulle le câble qui le traverse.

Cependant, lorsqu'un tel voile souple est doté d'une zone interne détachable par déchirure, la traction exercée sur l'organe de préhension pour déchirer le voile provoque une déformation non maîtrisée de ce dernier, et fait apparaître le risque que le voile se déchire difficilement ou en dehors du tracé de la ligne de fragilité.

La présente invention a pour but de proposer un élément de paroi exempt de ce défaut.

A cette fin, l'élément de paroi de l'invention, par ailleurs conforme à la définition générique qu'en donne le préambule ci-dessus, est essentiellement caractérisé en ce que l'organe de préhension est formé par une languette solidaire d'un anneau rigide adhérant à la zone interne du voile souple.

De préférence, le voile rigide et l'anneau rigide sont réalisés dans une même matière rigide.

Il est par ailleurs avantageux que l'anneau rigide soit, dans la configuration originelle de l'élément de paroi, relié au voile rigide par des pattes frangibles assurant son maintien par rapport au voile rigide.

L'anneau rigide et les pattes frangibles peuvent être réalisés dans une même matière rigide, laquelle peut comprendre un polymère thermoplastique ou être constituée d'un tel polymère.

Le voile souple est de préférence réalisé dans un élastomère, le voile souple au moins et l'anneau rigide étant par exemple obtenus par un moulage utilisant une injection bi-matière.

Enfin, l'élément de paroi de l'invention peut présenter des organes de guidage et / ou de fixation réversible, lui conférant un caractère amovible.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue de face d'un élément de paroi conforme à l'invention;
- la figure 2 est une vue en coupe de l'élément de paroi illustré à la figure 1, observé suivant l'incidence repérée par les flèches II-II de la figure 1;
- la figure 3 est une vue en coupe de l'élément de paroi illustré à la figure 1, observé suivant l'incidence repérée par les flèches III-III de la figure 1;
- la figure 4 est une vue en perspective de l'élément de paroi illustré à la figure 1;
- la figure 5 est une vue en coupe de l'élément de paroi illustré à la figure 1, observé suivant l'incidence repérée par les flèches V-V de la figure 1; et
- la figure 6 est une vue agrandie du détail repéré par la référence VI sur la figure 5.

Comme indiqué précédemment, l'invention concerne un élément de paroi pour traversée étanche de câble, par exemple utilisable comme élément de paroi d'un boîtier électrique étanche ou d'un tube.

Cet élément de paroi comprend essentiellement un voile rigide 1 percé d'un orifice 10, et un voile souple 2 qui, dans la configuration d'origine donnée à cet élément de paroi lors de sa fabrication, bouche l'orifice 10.

Le voile souple 2 comprend, au centre de l'orifice 10, une ou plusieurs zones internes telles que la zone 20.

La zone 20 est bordée par une ligne annulaire de fragilité 21 et dotée d'un organe de préhension 31.

L'organe de préhension 31 permet de détacher cette zone 20 par déchirure du voile souple 2 le long de la ligne de fragilité 21 et de donner ainsi à l'élément de paroi une nouvelle configuration, conventionnellement dénommée opérationnelle, et dans laquelle un câble de diamètre relativement important peut être inséré dans le voile souple 2, à l'emplacement initial de la zone interne 20.

Le voile rigide 1 est par exemple réalisé dans une matière rigide telle qu'un polymère thermoplastique, tandis que le voile souple 2 est par exemple réalisé dans un élastomère.

Selon l'invention, l'organe de préhension 31 est formé par une languette solidaire d'un anneau rigide 32 adhérant à la zone interne 20 du voile souple 2, cet anneau rigide pouvant être réalisé dans la même matière que le voile rigide 1.

Dans la configuration originelle de l'élément de paroi, l'anneau rigide 32 est par exemple relié au voile rigide 1 par des pattes frangibles 33 qui assurent le maintien de cet anneau 32 par rapport au voile rigide 1.

Pour simplifier au maximum la fabrication de l'élément de paroi de l'invention, l'anneau rigide 32, les pattes frangibles 33 et le voile rigide 1 peuvent être réalisés dans la même matière rigide.

Par ailleurs, le voile souple 2 et l'anneau rigide 32 sont avantageusement obtenus par un moulage utilisant une injection bi-matière, l'anneau rigide 32 pouvant même être moulé avec le voile rigide 1 et les pattes frangibles 33.

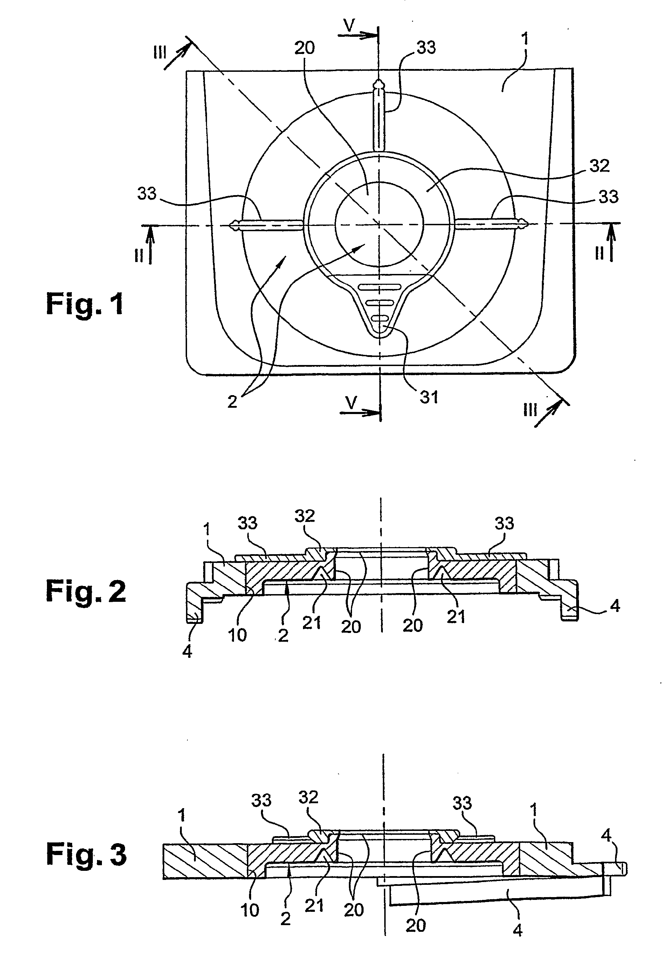

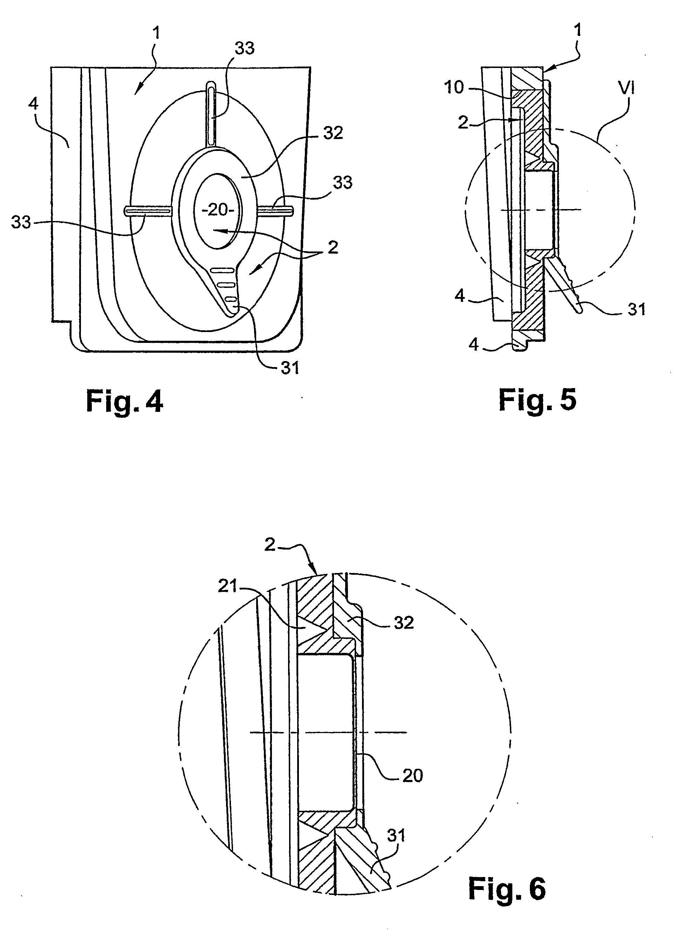

Comme le montrent par ailleurs les figures 2 à 5, l'élément de paroi de l'invention peut en outre présenter des organes 4 destinés à permettre de le guider et/ou de le fixer de façon réversible, et grâce auxquels cet élément de paroi peut former un élément de paroi amovible d'un boîtier ou d'un tube.

Bien que l'invention développe principalement ses avantages dans le cas où l'anneau rigide 32 doit être retiré pour permettre le passage d'un câble de diamètre relativement important, il convient de remarquer que l'anneau rigide 32 laisse libre accès à la zone interne 20 du voile souple 2, de sorte qu'un câble de diamètre relativement faible peut être inséré à travers l'élément de paroi par perforation de cette zone interne 20 sans requérir le retrait de l'anneau rigide 32.

## Revendications

1. Élément de paroi pour traversée étanche de câble, notamment utilisable comme élément de paroi d'un boîtier électrique étanche ou d'un tube et présentant au moins une configuration originelle et une configuration opérationnelle, cet élément de paroi comprenant un voile rigide (1) percé d'un orifice (10) et un voile souple (2) bouchant cet orifice (10) dans la configuration originelle de l'élément de paroi, le voile souple (2) comprenant au moins une zone interne (20) disposée sensiblement au centre de l'orifice (10), bordée par une ligne annulaire de fragilité (21), et dotée d'un organe de préhension (31) permettant de la détacher par déchirure du voile souple (2) le long de la ligne de fragilité (21) pour placer l'élément de paroi dans sa configuration opérationnelle, **caractérisé en ce que** l'organe de préhension (31) est formé par une languette solidaire d'un anneau rigide (32) adhérant à la zone interne (20) du voile souple (2).

2. Élément de paroi suivant la revendication 1, **caractérisé en ce que** le voile rigide (1) et l'anneau rigide (32) sont réalisés dans une même matière rigide.

3. Élément de paroi suivant la revendication 1 ou 2, **caractérisé en ce que** l'anneau rigide (32) est, dans la configuration originelle de l'élément de paroi, relié au voile rigide (1) par des pattes frangibles (33) assurant son maintien par rapport au voile rigide (1).

4. Élément de paroi suivant la revendication 3, **caractérisé en ce que** l'anneau rigide (32) et les pattes frangibles (33) sont réalisés dans une même matière rigide.

5. Élément de paroi suivant l'une quelconque des revendications 2 et 4, **caractérisé en ce que** ladite matière rigide comprend un polymère thermoplastique.

6. Élément de paroi suivant l'une quelconque des revendications précédentes, **caractérisé en ce que** le voile souple (2) est réalisé dans un élastomère.

7. Élément de paroi suivant l'une quelconque des revendications précédentes, **caractérisé en ce qu'**au moins le voile souple (2) et l'anneau rigide (32) sont obtenus par un moulage utilisant une injection bi-matière.

8. Élément de paroi suivant l'une quelconque des revendications précédentes, **caractérisé en ce qu'**il présente des organes (4) de guidage et / ou de fixation réversible lui conférant un caractère amovible.

## Patentansprüche

1. Wandelement für eine dichte Kabeldurchführung, das insbesondere als Wandelement eines dichten Schaltgehäuses oder eines Rohrs verwendbar ist und mindestens eine Originalkonfiguration und eine Betriebskonfiguration aufweist, wobei dieses Wandelement eine steife Abdeckung (1), in die eine Öffnung (10) gebohrt ist, und eine elastische Abdeckung (2) enthält, die diese Öffnung (10) in der Originalkonfiguration des Wandelements verschließt, wobei die elastische Abdeckung (2) mindestens eine innere Zone (20) enthält, die im Wesentlichen in der Mitte der Öffnung (10) angeordnet ist, von einer ringförmigen Zerbrechlichkeitslinie (21) umrandet wird und mit einem Greiforgan (31) versehen ist, das es ermöglicht, sie durch Zerreißen der elastischen Abdeckung (2) entlang der Zerbrechlichkeitslinie (21) abzulösen, um das Wandelement in seine Betriebskonfiguration zu bringen, **dadurch gekennzeichnet, dass** das Greiforgan (31) von einer Zunge geformt wird, die fest mit einem an der inneren Zone (20) der elastischen Abdeckung (2) haftenden steifen Ring (32) verbunden ist.

2. Wandelement nach Anspruch 1, **dadurch gekennzeichnet, dass** die steife Abdeckung (1) und der steife Ring (32) aus dem gleichen steifen Material hergestellt werden.

3. Wandelement nach Anspruch 1 oder 2, **dadurch gekennzeichnet, dass** der steife Ring (32) in der Originalkonfiguration des Wandelements mit der steifen Abdeckung (1) durch zerbrechliche Laschen (33) verbunden ist, die seinen Halt bezüglich der steifen Abdeckung (1) gewährleisten.

4. Wandelement nach Anspruch 3, **dadurch gekennzeichnet, dass** der steife Ring (32) und die zerbrechlichen Laschen (33) aus dem gleichen steifen Material hergestellt werden.

5. Wandelement nach einem der Ansprüche 2 und 4, **dadurch gekennzeichnet, dass** das steife Material ein thermoplastisches Polymer enthält.

6. Wandelement nach einem der vorhergehenden Ansprüche, **dadurch gekennzeichnet, dass** die elastische Abdeckung (2) aus einem Elastomermaterial hergestellt wird.

7. Wandelement nach einem der vorhergehenden Ansprüche, **dadurch gekennzeichnet, dass** mindestens die elastische Abdeckung (2) und der steife Ring (32) durch Formen unter Verwendung einer BiInjektion von zwei Materialien erhalten werden.

8. Wandelement nach einem der vorhergehenden Ansprüche, **dadurch gekennzeichnet, dass** es Organe (4) zur Führung und/oder umkehrbaren Befestigung aufweist, die ihm einen entfernbaren Charakter verleihen.

## Claims

1. Wall element for sealingly passing a cable, notably usable as a wall element of a sealed electrical box or of a tube and having at least one original configuration and an operational configuration, this wall element comprising a rigid cover (1) pierced with an orifice (10) and a flexible cover (2) blocking this orifice (10) in the original configuration of the wall element, the flexible cover (2) comprising at least one internal zone (20) placed substantially at the centre of the orifice (10), bordered by an annular line of weakness (21), and furnished with a gripping member (31) making it possible to detach it by a tearing of the flexible cover (2) along the line of weakness (21) in order to place the wall element in its operational configuration, **characterized in that** the gripping member (31) is formed by a tongue secured to a rigid ring (32) adhering to the internal zone (20) of the flexible cover (2).

2. Wall element according to Claim 1, **characterized in that** the rigid cover (1) and the rigid ring (32) are made of one and the same rigid material.

3. Wall element according to Claim 1 or 2, **characterized in that** the rigid ring (32) is, in the original configuration of the wall element, connected to the rigid cover (1) by frangible tabs (33) ensuring its retention relative to the rigid cover (1).

4. Wall element according to Claim 3, **characterized in that** the rigid ring (32) and the frangible tabs (33) are made of one and the same rigid material.

5. Wall element according to either one of Claims 2 and 4, **characterized in that** the same rigid material comprises a thermoplastic polymer.

6. Wall element according to any one of the preceding claims, **characterized in that** the flexible cover (2) is made of an elastomer.

7. Wall element according to any one of the preceding claims, **characterized in that** at least the flexible cover (2) and the rigid ring (32) are obtained by a moulding using a bi-material injection.

8. Wall element according to any one of the preceding claims, **characterized in that** it has guidance and/or reversible attachment members (4) providing it with a removable character.
